# EUROPEAN PATENT APPLICATION

(11) **EP 2 133 391 A1**
(43) Date of publication of application: **16.12.2009**
(21) Application number: 08722736.9
(22) Date of filing: 24.03.2008
(51) Int. Cl.: C08L 53/00, C08F 293/00, C08L 25/18

(54) **METHOD FOR PRODUCING MACROMOLECULE HAVING MICROPHASE-SEPARATED STRUCTURE AND MACROMOLECULE HAVING MICROPHASE-SEPARATED STRUCTURE**

(30) Priority: 28.03.2007 JP 2007084120
(71) Applicant: Nitto Denko Corporation, Ibaraki-shi, Osaka 567-8680 (JP)
(72) Inventor: KONISHI, Takahisa, Ibaraki-shi Osaka 567-8680 (JP); SHINTANI, Takuji, Ibaraki-shi Osaka 567-8680 (JP); MATSUSHITA, Yushu, Nagoya-shi Aichi 464-8603 (JP); TAKANO, Atsushi, Nagoya-shi Aichi 464-8603 (JP); KAWAGUCHI, Daisuke, Nagoya-shi Aichi 464-8603 (JP)
(74) Representative: Hart-Davis, Jason
(86) International application number: PCT/JP2008/055470
(87) International publication number: WO 2008/123203

(57) **Abstract**

A process for producing a polymeric object having a microphase-separated structure that can improve the degree of freedom for the structure to be formed is provided. A block copolymer composed of two or more segments and having a first segment composed of a monomer unit having a first functional group capable of forming an ionic bond and/or a hydrogen bond and a second segment incompatible with the first segment, and a polymer having, at other than the terminals of its polymer chain, a second functional group capable of forming an ionic bond and/or a hydrogen bond with the first functional group are mixed. Then, allowing the first segment to be associated with the polymer at many points by an ionic bond and/or a hydrogen bond, the mixture of the copolymer and the polymer is microphase separated. As a result, a polymeric object is formed including a region including the first segment and the polymer that have been associated with each other, and a region including the second segment.

## Description

### TECHNICAL FIELD

The present invention relates to a polymeric object having a microphase-separated structure and a process for producing the same.

### BACKGROUND ART

It is known that different kinds of polymers, in other words, polymers composed of mutually different monomer units are generally incompatible with each other, and in the case of mixing them, the mixture separates into phases each composed of a different polymer. Such phase separation is called macrophase separation, and its scale is normally 1 µm or more, typically several µm to several ten µm. As the molecular weight of the polymers to be mixed increases, macrophase separation tends to occur more easily due to the increased incompatibility between the polymers.

As phase separation of polymers, there is microphase separation (also referred to as "nanophase separation") other than this macrophase separation. The phase separation scale of the microphase separation is nanometer order (for example, less than 1 µm, typically several nm to several hundred nm). Examples of the microphase separation include phase separation based on incompatibility between segments in a block copolymer. When microphase separation is developed in a block copolymer without occurrence of macrophase separation, a polymeric object is expected to be formed having various functions based on difference in properties between micro regions formed due to the phase separation. Further, it is known that, in microphase separation of a block copolymer, various phase-separated structures, such as a columnar (cylinder) structure, a lamellar structure, a co-continuous structure, or a globular structure, are formed depending on variation of the volume fraction of each segment constituting the copolymer. If the phase-separated structure to be formed can be controlled, the degree of freedom in selecting the above functions is expected to be improved.

In order to vary the volume fraction of a segment in a block copolymer, a method of adjusting the molecular weight ratio between segments in the copolymer, or a method of mixing a polymer compatible with the segment or a polymer of the same kind as the segment to the block copolymer may be employed. The former method requires precision polymerization, for each microphase-separated structure intended to be formed, of a block copolymer having an appropriate molecular weight of segments, and therefore it requires strict control of the molecular weight thereof. On the other hand, in the latter method, since the volume fraction of the segment can be varied by controlling the mixing ratio of a block copolymer and the above polymer, control of microphase-separated structure is more convenient than in the former method. However, there are some limitations, for example, that the molecular weight of the polymer to be mixed is required to be lower than that of the segment, or a range of the above mixing ratio in which microphase separation can be achieved is narrow. For example, in the case of mixing the polymer exceeding the range, a part or all of the microphase-separated structure is lost and macrophase separation occurs as also described below in Examples.

JP 5(1993)-287084 A (document 1) discloses an example of producing a polymeric object having a microphase-separated structure by using the latter method. The document 1 discloses a process for widening the copolymer composition range where a co-continuous structure can be formed as a microphase-separated structure, in AB-type or ABA-type copolymer that is a two-component block copolymer composed of two kinds of mutually-incompatible segments (in the document 1, which are referred to as "polymer chains" or "block chains") A and B. In one of the processes disclosed in the document 1, a polymer having compatibility with the segment A or a polymer of the same kind as the segment A is mixed to the copolymer (cf. Claims 3 and 4 in the document 1). In this process, a polymer to be mixed needs to be a polymer having a lower molecular weight than the segment A, or a polymer not only having a molecular weight approximately equal to or lower than the segment A but also having a broad molecular weight distribution, in order for swelling (which is carried out by a polymer having a relatively low molecular weight) and filling (which is carried out by a polymer having a relatively high molecular weight and having a molecular weight approximately equal to the segment A) of the segment A in the course of forming a co-continuous structure (cf. paragraph numbers [0028] and [0029] in the document 1).

JP 2(1990)-279741 A (document 2) discloses a process for producing a microporous polymeric object using formation of a polymeric object having a microphase-separated structure. In the process of the document 2, a polymer (A) having a functional group (a) capable of forming an ionic bond at both terminals of the polymer chain and a polymer (B) having a functional group (b) capable of forming an ionic bond with the functional group (a) are mixed, and the polymer (B) and the terminals of the polymer (A) are ionically bonded so as to form a pseudo-block copolymer, thereby allowing microphase separation into a region composed of polymer (A) and a region composed of polymer (B). Thereafter, a microporous polymer thin film is obtained from the polymeric object in the form of a thin film obtained by this phase separation, by breaking the ionic bond between the polymer (A) and the polymer (B) to extract and remove either the polymer (A) or (B). The obtained polymer thin film is composed of only either one of the polymers (A) and (B) that has not been extracted and removed. However, in this process, since the ionic bond developed between the polymers (A) and (B) is a bond based on functional groups located at the terminals of the polymer chain, the binding rate to the polymer is low. Further, the binding force is smaller compared to binding force (covalent bond) between segments in a general block copolymer. That is, since both the force and the number of the bonds developed between the two polymers are small, it is difficult to develop microphase separation stably. Furthermore, practically, the phase separation is not phase separation in a block copolymer but phase separation in a state where a plurality of the polymers (A) are binding to a single polymer (B), and it is therefore difficult to control the microphase-separated structure to be formed. Actually, in the document 2, although only a lamellar structure is disclosed as a phase-separated structure, no other microphase-separated structures, such as a columnar structure, and a globular structure are disclosed or suggested therein.

### DISCLOSURE OF THE INVENTION

It is an object of the present invention to provide a process for producing a polymeric object having a microphase-separated structure that is different from those conventional processes and that allows a high degree of freedom in controlling the microphase-separated structure to be formed.

In the process for producing a polymeric object having a microphase-separated structure according to the present invention, a block copolymer (I) is mixed with a polymer (II) by thermal-melting followed by lowering temperature, or in a solvent followed by removing the solvent. The block copolymer (I) is composed of two or more kinds of segments having mutually-different monomer units, and has a first segment composed of a monomer unit having a first functional group capable of forming an ionic bond and/or a hydrogen bond and a second segment incompatible with the first segment. The polymer (II) has, at other than the terminals of its polymer chain, a second functional group capable of forming an ionic bond and/or a hydrogen bond with the first functional group. This allows the first segments of the copolymer (I) to be associated with the polymer (II) at many points by an ionic bond and/or a hydrogen bond developed between the first and the second functional groups, and the mixture of the copolymer (I) and the polymer (II) to be microphase-separated. As a result a polymeric object is formed having a microphase-separated structure including a region including the first segment and the polymer (II) that are mutually associated, and a region including the second segment.

The polymeric object having a microphase-separated structure of the present invention is a polymeric object obtained by the above production process of the present invention.

In the production process of the present invention, the first segment of the copolymer (I) is allowed to be associated with the polymer (II) at many points by an ionic bond and/or a hydrogen bond developed between the first and the second functional groups, and the mixture of the copolymer (I) and the polymer (II) is allowed to be microphase-separated. According to this process, it is possible to control the microphase-separated structure to be formed, by varying the volume fraction of the first segment of the copolymer (I) due to mixing of the polymer (II). The molecular weight of the polymer (II) is, unlike the above conventional processes, not necessarily equal to or lower than that of the first segment, and may be higher than, for example, that of the first segment. A broader mixing range of the copolymer (I) and the polymer (II) in which microphase separation can be achieved than the mixing ranges of the block copolymer and the polymer in the conventional processes is also feasible. For this reason, in the production process of the present invention, the degree of freedom in controlling the microphase-separated structure to be formed is improved, compared to the conventional processes.

Further, compared to the process in which a pseudo-block copolymer by an ionic bond is used, as disclosed in the document 2, it is possible to better ensure microphase separation in the production process of the present invention.

### BRIEF DESCRIPTION OF THE DRAWINGS

FIG. 1 is a schematic diagram illustrating a synthetic scheme of polystyrene-poly2-vinylpyridine (copolymer SP), used as a block copolymer (I) in an example.
FIG. 2 is a schematic diagram illustrating a synthetic scheme of poly4-hydroxystyrene (polymer H), used as a polymer (II) in an example.
FIG. 3 is a schematic diagram illustrating a synthetic scheme of poly2-vinylpyridine (polymer P), used as a polymer in a comparative example.
FIG. 4 is a set of views each showing a transmission electron microscope (TEM) observation image of a polymeric object (for each sample 1-1 to 1-4) produced in an example.
FIG. 5 is a set of views each showing a TEM observation image of a polymeric object (for each sample 2-1 to 2-6) produced in an example.
FIG. 6 is a set of views each showing a TEM observation image of a polymeric object (for each sample 3-1 to 3-6) produced in an example.
FIG. 7 is a set of views each showing a TEM observation image of a polymeric object (for each sample 4-1 to 4-6) produced in an example.
FIG. 8 is a set of views each showing a TEM observation image of a polymeric object (for each sample A-1 to A-4) produced in a comparative example.

### BEST MODE FOR CARRYING OUT THE INVENTION

In the production process of the present invention, the microphase-separated structure to be formed can be controlled by controlling the molecular weight of the polymer (II) and/or the mixing ratio of the copolymer (I) and the polymer (II). This process allows more convenient control of the microphase-separated structure to be formed, compared to the above described method of adjusting the molecular weight of segments in a block copolymer.

According to the production process of the present invention, a polymeric object can be formed having a columnar (cylinder) structure, a lamellar structure, a globular structure or a co-continuous structure, as a microphase-separated structure. What kind of phase-separated structure the polymeric object to be formed has depends on the kinds of the copolymer (I) and polymer (II), the mixing ratio of the two, the molecular weights of the first segment and polymer (II), the kinds of the first and the second functional groups, and the like.

The block copolymer (I) is not limited specifically as long as (1) being composed of two or more kinds of segments having mutually-different monomer units (that is, a block copolymer composed of two or more components), (2) having a first segment composed of a monomer unit having a first functional group capable of forming an ionic bond and/or a hydrogen bond, and (3) having a second segment incompatible with the first segment.

For example, the copolymer (I) may be a block copolymer composed of two kinds of segments A and B having mutually-different monomer units. Typically, the copolymer (I) is a diblock copolymer (two-component binary block copolymer) that has each one of the above two kinds of segments, so-called AB-type. In this case, either one of the segments A and B may be the first segment that is composed of a monomer unit having the first functional group, and the other one may be the second segment incompatible with the first segment.

The copolymer (I) may be, for example, a block copolymer having segments, only one of which has the first functional group. In this case, the second segment does not have the first functional group.

The polymer (II) is not specifically limited as long as having, at other than the terminals of its polymer chain, the second functional group capable of forming an ionic bond and/or a hydrogen bond with the first functional group included in the first segment of the copolymer (I). It is preferable that the polymer (II) be a homopolymer composed of a monomer unit having the second functional group in order to better ensure association at many points with the first segment. The polymer (II) may have the second functional group at the terminals of its polymer chain.

The molecular weight and the molecular weight distribution of the polymer (II) are not specifically limited.

As described above, in order to control a microphase-separated structure by mixing a block copolymer with a polymer compatible with segments constituting the copolymer, conventional processes require to use a polymer having a lower molecular weight than the segment, or having a molecular weight approximately equal to or lower than the segment as well as having a broad molecular weight distribution. In contrast, according to the production process of the present invention, the molecular weight of the polymer (II) may be higher than that of the first segment, and in addition, it is also possible to use a homopolymer having a narrow molecular weight distribution as a polymer (II).

The combination of the first and the second functional groups is not specifically limited as long as an ionic bond and/or a hydrogen bond is formed between the two functional groups. It should be noted that, generally, there is no clear border between an ionic bond and a hydrogen bond, and these two bonds occur simultaneously in many cases. It depends on the combination of the first and the second functional groups whether a hydrogen bond is dominant or an ionic bond is dominant.

For example, in the case where the first functional group is an azaphenyl group or a dialkylamine group, when the second functional group is a group exhibiting high dissociation of proton such as a sulfonic acid group, the ionic bond is dominant between the two functional groups. Meanwhile, in the above case, when the second functional group is a group exhibiting low dissociation of proton such as a hydroxyphenyl group, the hydrogen bond is dominant between the two functional groups. Further, in the above case, when the second functional group is a carboxyl group exhibiting an intermediate dissociation of proton between a sulfonic acid group and a hydroxyphenyl group, both ionic bond and hydrogen bond coexist in the bond between the two functional groups.

Examples of a combination of the first and the second functional groups include a combination of a functional group having a nitrogen atom and a functional group having an oxygen atom.

Specifically, the combination of the first and the second functional groups may be a combination of at least one selected from an azaphenyl group, a dialkylamine group, a cyano group and a morpholine group, and at least one selected from a hydroxyphenyl group, a sulfonic acid group and a carboxyl group. More specifically, it may be a combination of an azaphenyl group and a hydroxyphenyl group.

The kind of the monomer unit constituting each segment of the copolymer (I) is not specifically limited as long as the monomer unit is capable of forming a block copolymer. Examples of the monomer unit without the first functional group include vinyl monomers such as isoprene, styrene, butadiene and 1-butene, acrylic acid ester monomers, and methacrylic acid ester monomers (wherein, the alkyl group of the ester is a linear or branched alkyl group having 1 to 10 carbon atoms).

The second segment may be composed of, for example, such monomer unit without the first functional group.

Monomer units with the first functional group may be, for example, 2-vinylpyridine, 4-vinylpyridine, 2-dimethylaminoethylacrylate, 2-dimethylaminoethylmethacrylate, acrylonitrile, acryloylmorpholine and the like.

The first segment may be composed of such monomer unit with the first functional group.

The copolymer (I) in which these monomer units are combined is, for example, a (polystyrene-poly2-vinylpyridine) diblock copolymer.

The kind of the monomer unit having the second functional group that constitutes the polymer (II) is not specifically limited, but examples thereof include 4-hydroxystyrene.

The polymer (II) may be poly(4-hydroxystyrene) that is a homopolymer of the above 4-hydroxystyrene.

The block copolymer (I) and the polymer (II) can be formed by a common process for polymerizing a block copolymer and a polymer. Various kinds of living polymerizations are typical as a polymerization process of a block copolymer.

The copolymer (I) and the polymer (II) are mixed by thermal-melting, or in a solvent, so as to be disordered for a while. After that, the first segment is associated with the polymer (II) at many points, followed by microphase separation of the mixture of the copolymer (I) and the polymer (II), by cooling the mixture in the case of thermal-melt mixing, or by removing the solvent in the case of mixing in a solvent. As a result, a microphase-separated structure is formed including a region including the first segment and the polymer (II) and a region including the second segment, thereby allowing a polymeric object having such structure to be obtained.

The production process of the present invention also allows a microphase-separated structure including a region composed of the first segment and the polymer (II) and/or a region composed of the second segment, or a microphase-separated structure composed of these regions to be formed.

The method for thermal-melt mixing or mixing in a solvent is not specifically limited, and a known technique may be used. Either process of mixing may be selected appropriately, depending on the kinds of the copolymer (I) and the polymer (II).

The mixing ratio of the copolymer (I) and the polymer (II) is not specifically limited.

As described above, in the conventional processes, when a block copolymer and a polymer compatible with the segment that constitutes the copolymer (which is, typically, the same kind of polymer as the segment) are mixed so as to achieve a microphase-separated structure, the mixing range of the two is not broad. In contrast, in the production process of the present invention, for example, the copolymer (I) and the polymer (II) may be mixed so that the weight ratio of the polymer (II) with respect to the first segment exceeds 1.3, or the weight ratio may be 1.6 or more, or even 2.3 or more as shown in a below-described example.

In the production process of the present invention, a polymeric object in an arbitrary shape can be formed, by molding the mixture of the copolymer (I) and the polymer (II) that have been mixed by thermal-melting or in a solvent before microphase separation of the mixture starts. For example, when applying the mixed solution obtained by mixing the two in a solvent onto a substrate, followed by drying, heat treatment or the like as needed, a polymeric object in a membrane shape (a polymer film) that has a microphase-separated structure can be formed.

A polymeric object of the present invention is a polymeric object having a microphase-separated structure obtained by the above-described production process of the present invention. The shape, the purpose of use and the like are not specifically limited. For example, a microporous polymeric object can be achieved by selectively removing only one component included in the polymeric object of the present invention.

### Examples

Hereafter, the present invention is described in detail by way of examples. The present invention is not limited to the below-described examples.

### <Synthesis of block copolymer (I)>

In this example, two-component diblock copolymer, polystyrene-poly2-vinylpyridine (copolymer SP), was used as a block copolymer (I). The synthetic process is indicated below. In the copolymer SP, a segment S containing styrene as its monomer unit corresponds to the second segment, and a segment P containing 2-vinylpyridine as its monomer unit corresponds to the first segment. The segment P has an azaphenyl group as the first functional group.

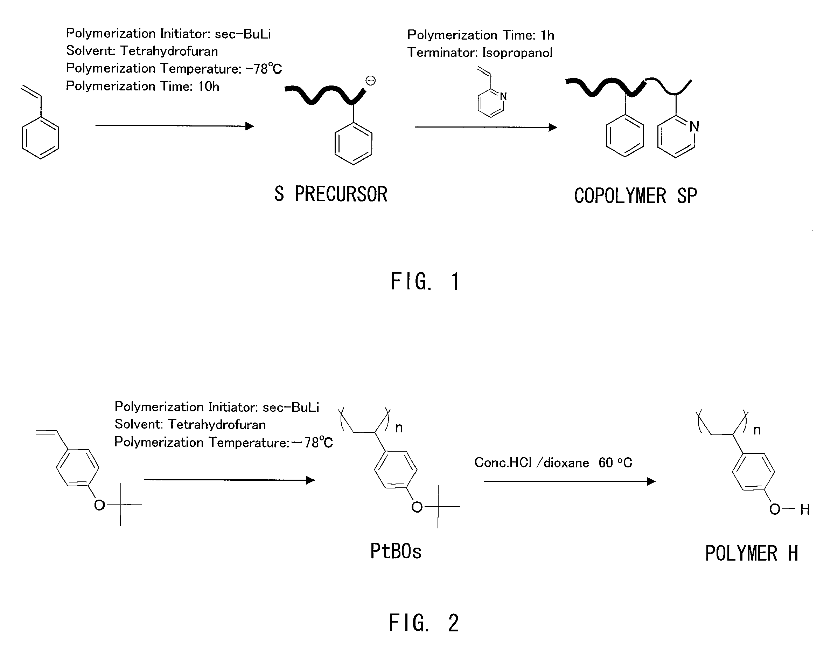

The copolymer SP was polymerized by a sequential living anionic polymerization process in which styrene and 2-vinylpyridine that have been highly purified under high vacuum are used as the monomers. The specific synthetic scheme is indicated in FIG. 1.

Two kinds of samples of the copolymer SP (SP-1 and SP-2) were produced that each have a different molecular weight by controlling the polymerization system. Each weight-average molecular weight Mw of the produced samples and each weight-average molecular weight Mw of the segments (segment S and segment P) of the copolymer SP are indicated in the following Table 1.

**Table 1**

| Sample | Weight-average molecular weight Mw | | |
|---|---|---|---|
| | Copolymer SP | Segment S | Segment P |
| SP-1 | 130000 | 87000 | 43000 |
| SP-2 | 151000 | 117000 | 34000 |

Multi-Angle Laser Light Scattering (MALLS), Gel Permeation Chromatography (GPC) and ¹H Nuclear Magnetic Resonance (¹H-NMR) were combined to evaluate the weight-average molecular weight Mw of each segment and copolymer SP. It should be noted that each weight-average molecular weight with respect to the polymer H and polymer P described below was measured in a similar manner.

### <Synthesis of polymer (II)>

In this example, poly4-hydroxystyrene (polymer H) was used as a polymer (II). The synthetic process is indicated below, and the specific synthetic scheme is indicated in FIG. 2. The polymer H herein is a homopolymer composed of a monomer unit having a hydroxyphenyl group as the second functional group.

As the first step of polymerizing the polymer H, using sec-BuLi as a polymerization initiator and tetrahydrofuran (THF) as a polymerization solvent, poly4-tert-butoxystyrene (PtBOs) was synthesized by anionic polymerization.

Next, as the second step of the polymerization, the polymer H was obtained by hydrolyzation of the above formed PtBOs in dioxane-hydrochloric acid mixed solution maintained at a temperature of 60°C. The reaction rate was estimated to be nearly 100%, based on the measurement results of the PtBOs and the obtained polymer H by ¹H-NMR, whereby it was confirmed that the hydrolysis reaction was proceeding quantitatively

Four kinds of the samples of the polymer H (H-1, H-2, H-3 and H-4) were produced that each have a different molecular weight by controlling the polymerization system. Table 2 indicates each weight-average molecular weight Mw of the produced samples.

**Table 2**

| Sample | Weight-average molecular weight Mw |
|---|---|
| H-1 | 13000 |
| H-2 | 8000 |
| H-3 | 14000 |
| H-4 | 52000 |

### <Synthesis of poly2-vinylpyridine>

Poly2-vinylpyridine (polymer P) that was the same kind of homopolymer as the segment P of the copolymer SP was synthesized to be used in a comparative example, separately from the syntheses of the copolymer SP and the polymer H. The synthetic process is indicated below.

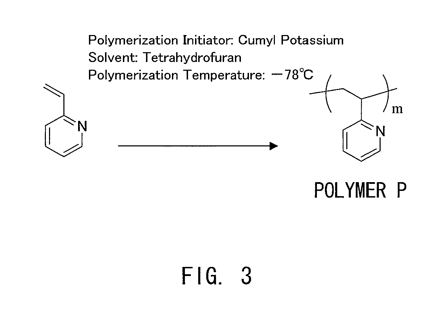

The polymer P was polymerized by an anionic polymerization process, using 2-vinylpyridine that has been highly purified under high vacuum as the monomers, cumyl potassium as a polymerization initiator, and tetrahydrofuran (THF) as a polymerization solvent. The specific synthetic scheme is indicated in FIG. 3.

Only one kind of the polymer P was produced. The weight-average molecular weight Mw of the produced sample is indicated in the following Table 3.

**Table 3**

| Sample | Weight-average molecular weight Mw |
|---|---|
| P-1 | 6000 |

### <Formation of polymeric object>

Next, dissolving each of the above-produced copolymer SP and polymer H into THF, a copolymer SP solution and a polymer H solution of 5 wt% concentration were produced. Subsequently, the two solutions were mixed in the mixing ratio of the copolymer SP and the polymer H indicated in the following Table 4, and then the mixed solution was poured into a container. After that, volatilizing and removing the THF by natural drying followed by further drying under vacuum (for a day) and heat treatment (at 180°C, for 24 hours), a polymeric object in the form of a thin film was formed.

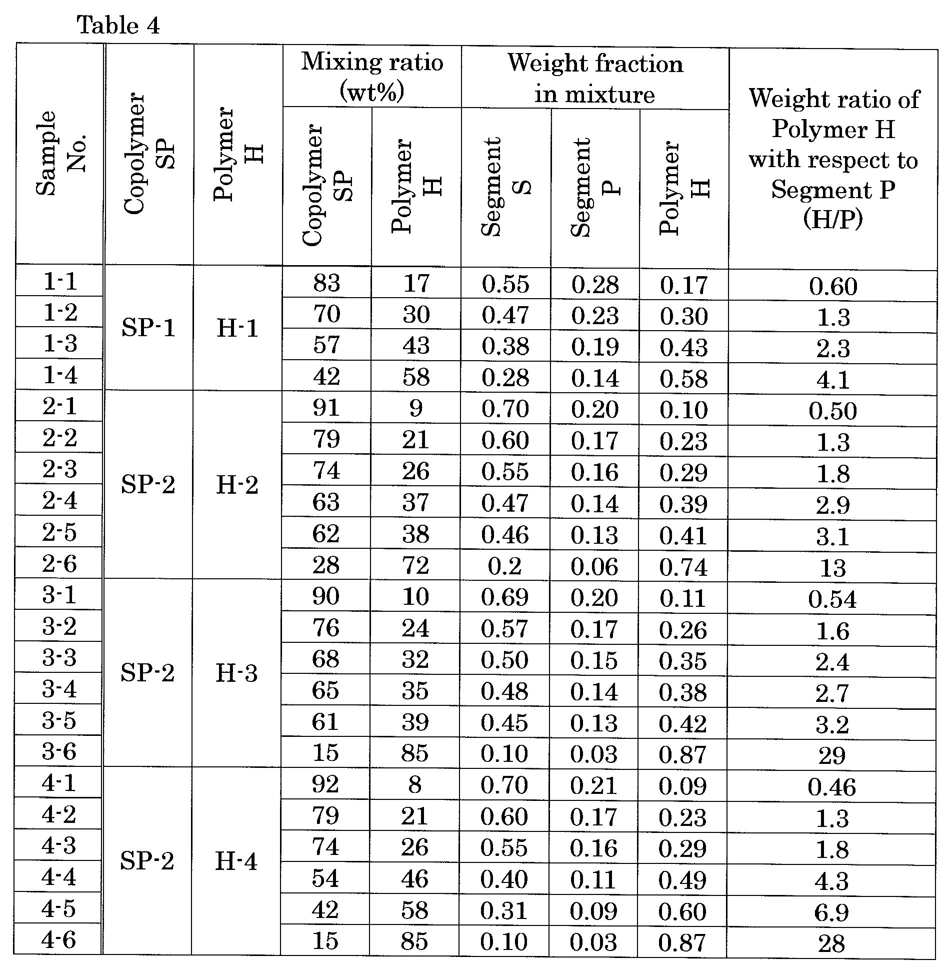

As indicated in Table 4, twenty-two kinds of the following samples of the polymeric object were produced by varying the kinds of copolymer SP and polymer H to be mixed and the mixing ratio of the two: samples 1-1 to 1-4 (mixtures of SP-1 and H-1), samples 2-1 to 2-6 (mixtures of SP-2 and H-2), samples 3-1 to 3-6 (mixtures of SP-2 and H-3) and samples 4-1 to 4-6 (mixtures of SP-2 and H-4).

Table 4 indicates the weight fractions of the segment S, segment P and polymer H in the mixture of the copolymer SP and the polymer H, and the weight ratio (H/P) of the polymer H with respect to the segment P that is the first segment, in addition to the above mixing ratio.

Samples of the polymeric object were further formed as a comparative example, separately from the above produced polymeric objects, by mixing the copolymer SP and the polymer P to be the mixing ratio indicated in the following Table 5. The specific method of forming these polymeric objects was the same as the method of forming the above polymeric objects formed from the copolymer SP and the polymer H.

**Table 5**

| Sample No. | Copolymer SP | Mixing ratio (wt%) | | Weight fraction in mixture | | Weight ratio of Polymer P with respect to Segment P (Ph/Pb) |
|---|---|---|---|---|---|---|
| | | Copolymer SP | Polymer P | Segment S | Segment P + Polymer P | |
| A-1 | SP-1 | 100 | 0 | 0.67 | 0.33 | 0 |
| A-2 | | 79 | 21 | 0.53 | 0.47 | 0.80 |
| A-3 | | 70 | 30 | 0.47 | 0.53 | 1.3 |
| A-4 | | 57 | 43 | 0.38 | 0.62 | 2.3 |

As shown in Table 5, four kinds of samples of the polymeric object (samples A-1 to A-4) of a comparative example were produced using SP-1 as a copolymer SP, and varying the mixing ratio. Table 5 indicates the weight fraction of the segment S, the total of the weight fractions of the segment P and the polymer P in the mixture of the copolymer SP and the polymer P (the total of the weight fractions of the styrene component and the 2-vinylpyridine component in the mixture), and the weight ratio (Ph/Pb) of the polymer P with respect to the segment P that is the first segment, in addition to the above mixing ratio.

### <Evaluation of polymeric object>

The phase-separated structures in the above formed polymeric objects were investigated and observed with transmission electron microscope (TEM). In TEM evaluation, very thin iodine-stained slices were prepared as measurement samples in order to obtain contrast between the region composed of polystyrene (S region) and the region composed of poly2-vinylpyridine and poly4-hydroxystyrene (P-H region). As to the polymeric objects of the comparative example, such slices were prepared as measurement samples in the same manner.

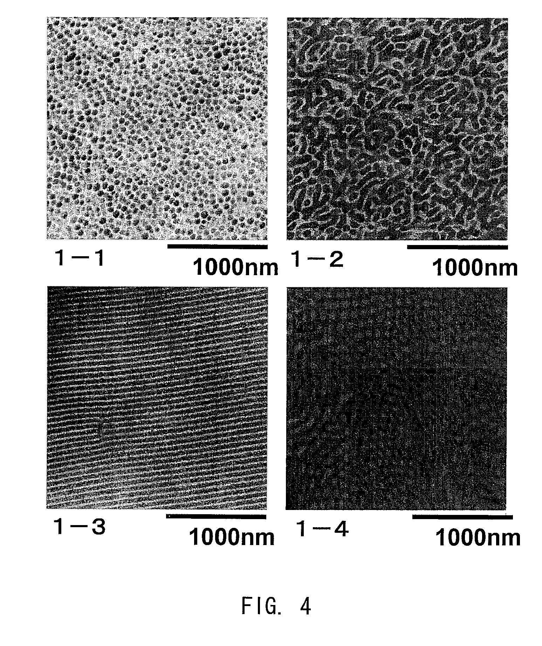

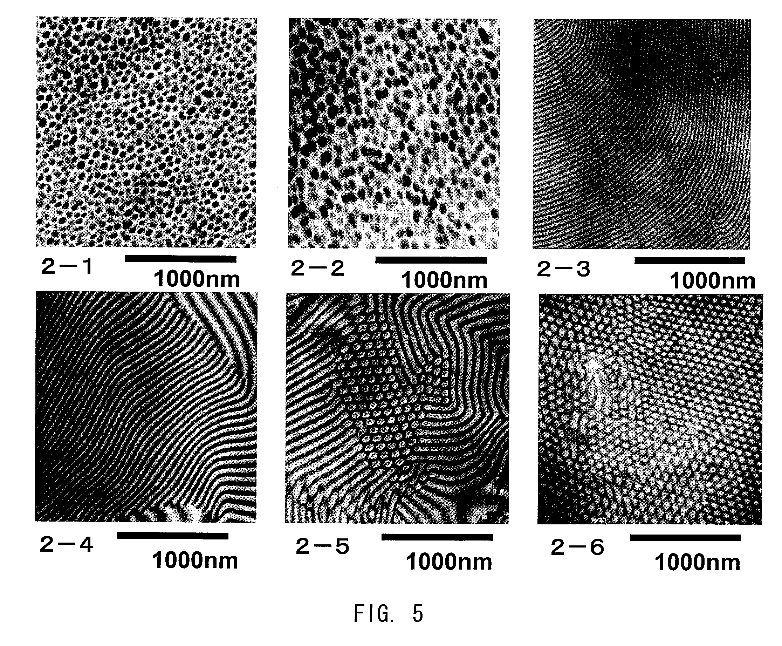

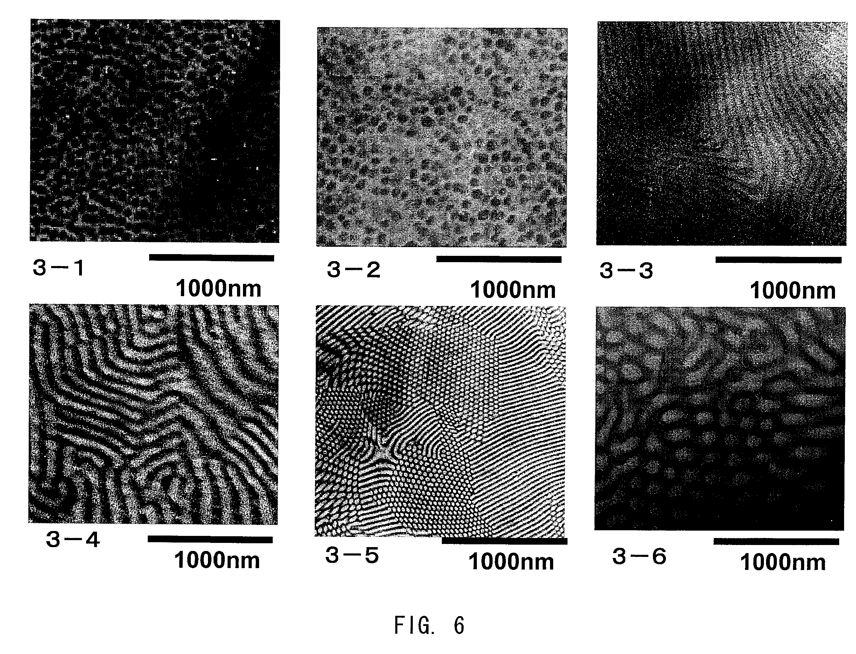

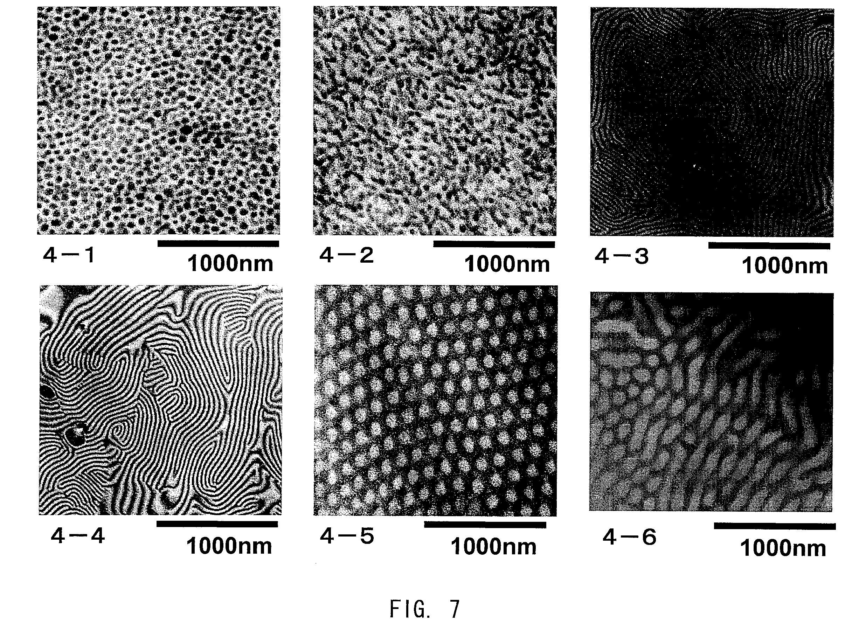

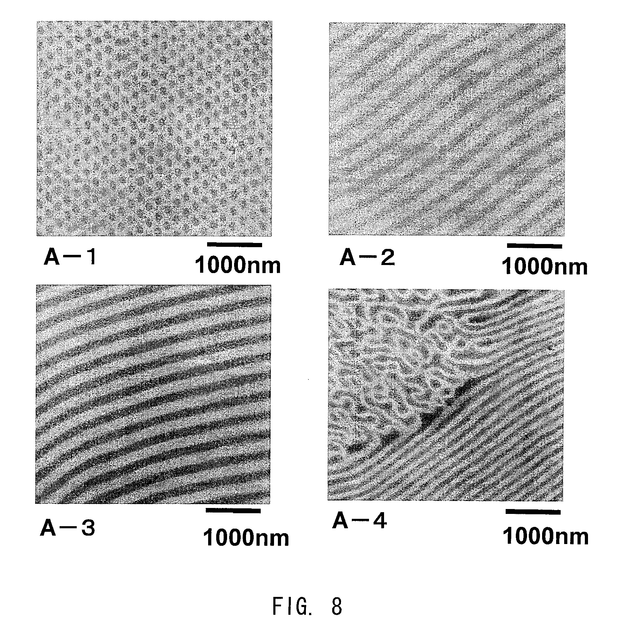

FIG. 4 to FIG. 8 indicate the evaluation results. In each figure, the number indicated at the lower left of each TEM observation image means the sample number. Further, the following Table 6 indicates the kind of the microphase-separated structure formed in each sample, and whether or not a macrophase-separated structure was formed in the sample.

**Table 6**

| Sample No. | Formed phase-separated structure | Presence or absence of macrophase separation |
|---|---|---|
| 1-1 | Globular | Absence |
| 1-2 | Co-continuous | Absence |
| 1-3 | Lamellar | Absence |
| 1-4 | Columnar | Absence |
| 2-1 | Globular | Absence |
| 2-2 | Globular | Absence |
| 2-3 | Lamellar | Absence |
| 2-4 | Lamellar | Absence |
| 2-5 | Columnar | Absence |
| 2-6 | Columnar | Absence |
| 3-1 | Globular | Absence |
| 3-2 | Globular | Absence |
| 3-3 | Lamellar | Absence |
| 3-4 | Lamellar | Absence |
| 3-5 | Columnar | Absence |
| 3-6 | Columnar | Absence |
| 4-1 | Globular | Absence |
| 4-2 | Globular | Absence |
| 4-3 | Lamellar | Absence |
| 4-4 | Lamellar | Absence |
| 4-5 | Columnar | Absence |
| 4-6 | Columnar | Absence |
| A-1 | Columnar | Absence |
| A-2 | Lamellar | Absence |
| A-3 | Lamellar | Absence |
| A-4 | Lamellar | Presence |

| | | |
|---|---|---|
| *Samples A-1 to A-4 are comparative examples. | | |

As shown in FIG. 4 to FIG. 8 and Table 6, in all of the samples 1-1 to 4-6 that are the example, a microphase-separated structure was formed without occurrence of macrophase separation. Specifically, in the case when the molecular weight of the polymer H is higher than that of the segment P in the copolymer SP (samples 4-1 to 4-6), and when the weight ratio of the polymer H with respect to the segment P (H/P) exceeds 1.3, or when it is 1.6 or more, or 2.3 or more, further, even when the weight ratio (H/P) is 10 or more, or 20 or more depending on the sample, a microphase-separated structure without occurrence of macrophase separation was feasible. Further, it was confirmed that the microphase-separated structure to be formed could be controlled by varying the weight ratio (H/P).

In contrast, in the samples A-1 to A-4 of the comparative example, in spite of mixing the polymer P having a sufficiently low molecular weight with respect to the molecular weight of the segment P, macrophase separation occurred at the time when the weight ratio of the polymer P with respect to the segment P (Ph/Pb) has reached 2.3 (sample A-4), and thus a uniform microphase-separated structure was lost.

The present invention may be embodied in other forms without departing from the spirit or essential characteristics thereof. The embodiments disclosed in this specification are to be considered in all respects as illustrative and not limiting. The scope of the invention is indicated by the appended claims rather than by the foregoing description, and all changes which come within the meaning and range of equivalency of the claims are intended to be embraced therein.

### INDUSTRIAL APPLICABILITY

According to the present invention, it is possible to provide a process for producing a polymeric object having a microphase-separated structure that is different from the conventional processes, and that can improve the degree of freedom for the microphase-separated structure to be formed.

The polymeric object having a microphase-separated structure obtained by the production process of the present invention is expected to be applied to various fields, such as optical field, electronic field, and chemical field based on, for example, the difference in properties between each region constituting the phase-separated structure, depending on its specific structure and the kinds of the copolymer (I) and the polymer (II) to be used.

## Claims

1. A process for producing a polymeric object having a microphase-separated structure, the process comprising the steps of:
thermal-melt mixing, followed by lowering the temperature, or mixing in a solvent, followed by removal of the solvent, of
a block copolymer (I) that is composed of two or more kinds of segments having mutually-different monomer units, and that has, as the segments, a first segment composed of a monomer unit having a first functional group capable of forming an ionic bond and/or a hydrogen bond and a second segment incompatible with the first segment, and
a polymer (II) that has, at other than the terminals of its polymer chain, a second functional group capable of forming an ionic bond and/or a hydrogen bond with the first functional group;
thereby allowing the first segment to be associated with the polymer (II) at many points by an ionic bond and/or a hydrogen bond developed between the first and the second functional groups, followed by microphase separation of the mixture of the copolymer (I) and the polymer (II); and
forming a polymeric object having a microphase-separated structure including a region including the first segment and the polymer (II) that have been associated with each other and a region including the second segment.

2. The process for producing a polymeric object having a microphase-separated structure according to claim 1, wherein
the phase-separated structure is controlled by controlling the molecular weight of the polymer (II), and/or the mixing ratio of the copolymer (I) and the polymer (II).

3. The process for producing a polymeric object having a microphase-separated structure according to claim 1, wherein
the phase-separated structure is a columnar structure, a lamellar structure, a globular structure, or a co-continuous structure.

4. The process for producing a polymeric object having a microphase-separated structure according to claim 1, wherein
the copolymer (I) is a block copolymer composed of two kinds of segments having mutually-different monomer units.

5. The process for producing a polymeric object having a microphase-separated structure according to claim 4, wherein
the copolymer (I) is a diblock copolymer having each one of the two kinds of the segments.

6. The process for producing a polymeric object having a microphase-separated structure according to claim 1, wherein
only one of the segments has the first functional group.

7. The process for producing a polymeric object having a microphase-separated structure according to claim 1, wherein
the polymer (II) is a homopolymer composed of a monomer unit having the second functional group.

8. The process for producing a polymeric object having a microphase-separated structure according to claim 1, wherein
a combination of the first and the second functional groups is a combination of a functional group having a nitrogen atom and a functional group having an oxygen atom.

9. The process for producing a polymeric object having a microphase-separated structure according to claim 8, wherein
a combination of the first and the second functional groups is a combination of at least one selected from an azaphenyl group, a dialkylamine group, a cyano group and a morpholine group, and at least one selected from a hydroxyphenyl group, a sulfonic acid group and a carboxyl group.

10. The process for producing a polymeric object having a microphase-separated structure according to claim 1, wherein
a combination of the first and the second functional groups is a combination of an azaphenyl group and a hydroxyphenyl group.

11. The process for producing a polymeric object having a microphase-separated structure according to claim 1, wherein
the copolymer (I) is a (polystyrene-poly2-vinylpyridine) diblock copolymer.

12. The process for producing a polymeric object having a microphase-separated structure according to claim 1, wherein
the polymer (II) is poly(4-hydroxystyrene).

13. The process for producing a polymeric object having a microphase-separated structure according to claim 1, wherein
the molecular weight of the polymer (II) is higher than the molecular weight of the first segment.

14. The process for producing a polymeric object having a microphase-separated structure according to claim 1, wherein
the copolymer (I) and the polymer (II) are mixed so that the weight ratio of the polymer (II) with respect to the first segment exceeds 1.3.

15. A polymeric object having a microphase-separated structure obtained by the process for producing the same according to claim 1.
